# EUROPEAN PATENT SPECIFICATION

(11) **EP 0 377 773 B1**
(45) Date of publication and mention of the grant of the patent: **26.06.1996**
(21) Application number: 89103423.3
(22) Date of filing: 27.02.1989
(51) Int. Cl.: H01J 29/00, H01J 31/15, G02B 27/00

(54) **Improved head up display arrangement for automotive vehicle or the like**
Einspiegelungssichtgerät für selbstfahrende Fahrzeuge oder dergleichen
Dispositif de visualisation de tête-haute pour véhicule automoteur ou analogue

(30) Priority: 13.01.1989 JP 2926/89 U
(43) Date of publication of application: 18.07.1990
(73) Proprietor: KANSEI CORPORATION, Omiya City Saitama Prefecture (JP)
(72) Inventor: Nagami, Masafumi c/o Kanto Seiki Co.,Ltd., Omiya City Saitama Prefecture (JP); Saito, Shinji c/o Kanto Seiki Co.,Ltd., Omiya City Saitama Prefecture (JP); Ishikawa, Tomonari c/o Kanto Seiki Co., Ltd., Omiya City Saitama Prefecture (JP); Ohtsuka, Nobuo c/o Kanto Seiki Co.,Ltd., Omiya City Saitama Prefecture (JP); Ozawa, Masaharu c/o Kanto Seiki Co., Ltd., Saitama Prefecture (JP)
(74) Representative: Grünecker, Kinkeldey, Stockmair & Schwanhäusser Anwaltssozietät

(56) References cited:
- EP-A- 0 058 415
- EP-A- 0 202 460
- PATENT ABSTRACTS OF JAPAN vol. 9, no. 150 (E-324)(1873) 25 June 1985, & JP-A-60 32239
- PATENT ABSTRACTS OF JAPAN vol. 8, no. 88 (E-240)(1525) 21 April 1984, & JP-A-59 8249

## Description

The present invention relates to an image display system for producing an image on a vehicular windshield comprising an image producing unit and a mirror reflecting the image produced by said image producing unit to said windshield disposed in a casing adjacent to said windshield, said casing having an aperture facing the windshield through which light from the image producing unit passes after being reflected by the mirror.

An image display system of this type is known from EP-A2-0 202 460 wherein a light source projects the image of a transparent LCD-display to the windscreen in front of the driver while the light from the light source penetrates through said LCD-display. A half mirror is disposed between the windscreen and the LCD-display as to reflect a part of the light falling in from the exterior onto a light sensor. Upon a certain intensity of the incident light, a micro-processor controlled circuit actuates a shutter between the LCD display and the windshield in order to prevent the LCD display from being damaged by sunlight.

From EP-A1-0 058 415 a cathode-ray tube (CRT) for a projector, for example a video projector, is known which is rather bulky in shape and therefore appears to be unsuited for the use in car-dashboards.

SAE Technical Paper 880454 entitled "Vacuum Fluorescent Display For Head-up Display" by Katayama et al of the Futaba Corp. discloses the use of VFD (vaccum fluorescent display) in place of CRT as a source of the image to be projected and the improvements which can be derived using so called co-planar VFD. However, this document does not go beyond the internal construction of the VFD devices and does not disclose any particular mounting or disposition techniques or constructions which would aid in actually deploying the a head-up display in an vehicle such as an automobile, aircraft, or the like.

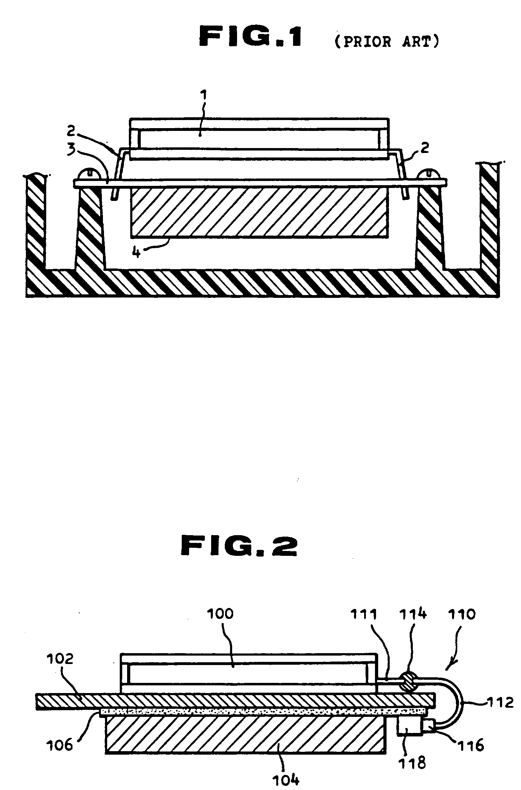

Currently the VFD elements 1 are formed with a plurality of centipede like leg connector pins 2 along each side thereof as is common practice with IC chips, and mounted on a perforated circuit board 3 in manner wherein the connector pins are inserted through apertures and soldered to connection lines formed on the rear face of the board. In the arrangement shown in Fig. 1 an IC type driving circuit 4 is also secured to the rear face of the circuit board 3 and operatively connected with the connection lines in a known manner.

However, this mounting arrangement has suffered from a number of problems. As will be appreciated from Fig. 1, the VFD element 1 is suspended in a spaced and contact free manner above the front face of the circuit board 3. Under these circumstances vibration which is applied to the circuit board 3 acts directly on the connections between the circuit lines and the connecting pins 2 and thus tends to reduce the longevity of the same. In order to increase the display capacity of the VFD, a large number of connector pins 2 become necessary. However, as each pin 2 must have a finite size and shape in order to endow the required mechanical strength and durability on the same, a limit on the number of pins which can be provided per unit distance in practical positions occurs or demands the size of the VFD element to be increased simply to accomodate the required large number of connections. Viz., in order to increase the number of different functions and images which can be displayed, the number of pins must be increased. Due to the above mentioned space limitation, maintaining the size of the VFD element within desired limits has been difficult.

Further, in large scale VFD devices the internal temperature rises to 30 - 40°C due to internal heating. In high intensity devices such as used in HUD (head up devices) the temperature rises to 60 - 100°C. Accordingly, heat tends to accumulate in both the VFD 1 and VFD driver units 4. This accumulated heat along with the heat produced by the operation of the VFD tends produce a synergistic detrimental effect on the condensors and the like in the chip circuitry defining the driver circuit and also gradually reduces the luminousity and efficiency of the VFD display tube.

During operation in daylight it is further possible for external radiation such as sunlight to directly impinge on the VFD element in a manner which adds to the amount of heat which accumulates therein and which further hastens the end of the effective working life of the HUD unit.

With respect to the above described prior art, the present invention intends to provide an image display system of the type as defined by the preamble of claim 1, which provides a bright image on a vehicular windshield under all light conditions and a good resistance to thermally induced deterioration as to improve its longevity.

This is achieved by a combination of the features of the preamble portion of claim 1 with those of its characterising portion.

In order to obviate the external radiation problem, the embodiments of the present invention are such as to house the HUD in a tunnel like arrangement and utilize a mirror to direct the image into the screen. However, this technique tends to induce a secondary problem that enhancement of a double imaging effect, which tends to inherently plague HUD systems, induces the need for additional inventive techniques in combination with the heat control arrangements which characterize certain embodiments of the present invention in order to achieve the appropriate image formation characteristics.

IR radiation reflective or transparent layers are appropriately arranged to prevent the heat radiation from entering the tunnel like housing arrangement in which the unit is disposed and/or impinging thereon. To reduce double images which tend to be produced, either a non-reflective coating is provided on the windshield or the masking in the display tube unit is modified in manner wherein the main image is such as to merge with the secondary one and produce a single aesthetic one.

According to a preferred embodiment of the present invention the image display system comprises an image producing unit in Form of a vacuum fluorescent display tube and a heat conductive member, according a further embodiment being a plate, said image producing unit being secured to said heat conductive member in a manner wherein heat generated in said image producing unit is transferred to said heat conductive member and dispersed to the atmosphere surrounding said image producing unit and said heat conductive member.

The above mentioned image display system is such that the windshield has a finite thickness and as such tends to produce a secondary image in addition to the main image formed by said first coating. According to a preferred embodiment the image display system is therefore arranged to further comprise an arrangement in said image producing unit which causes the main image to be so configured and arranged that the secondary image blends with the main image and renders the main and secondary images visibly indiscernable from one another.

As an alternative to the modified image production which cancels the double image it is possible to provide a non-reflective coating on the windshield to attenuate the secondary image formation.

Further features and advantages of the present invention will become more apparent from the following description of preferred embodiments when read in conjunction with the accompanying drawinqs, wherein:
Fig. 1 shows in elevation a prior art VFD for use in a HUD system;
Fig. 2 is a side elelvational view of a VFD mounting arrangement according to a first embodiment of the present invention;
Figs. 3 to 10 show further VFD mounting arrangements according to the second to ninth embodiment of the present invention;
Fig. 11 shows a tenth embodiment of the present invention wherein a VFD device of the type disclosed in any of Figs. 2 to 10, is disposed in a HUD system which features a tunnel like arrangement to shield the VFD from being directly subject to heat radiation from an external source such as the sun;
Figs. 12 to 15 show the eleventh to fourteenth embodiment of the present invention which are arranged to shield the HUD from external heat (IR) radiation which is reflected back though the shielding tunnel toward the VFD;
Fig. 16 is a sectional elevation showing the manner in which the double imaging problem occurs with the basic constructional layout which characterizes the first to fourth mounting embodiments of the present invention;
Fig. 17 shows an example of a secondary image formation which tends to plague the embodiment shown in Fig. 16;
Figs. 18 and 19 shows a fifthteenth embodiment of the present invention wherein the segments formed in the mask of the VFD are provided with beard-like lines which cause the main and secondary images to blurr together;
Figs. 20 and 21 show a sixthteenth embodiment of the present invention which features bold horizontal segments which bring about a blending of the main and secondary images; and
Fig. 22 is a sectional elevation showing the provision of a non-reflective layer which characterizes a seventeenth embodiment of the instant invention.

Fig. 2 shows a first embodiment of the present invention. In this arrangement the VFD unit 100 is bonded or otherwise directly secured to a heat conductive plate 102 made of aluminium or the like material, which serves to acts a heat sink and radiation/dispersing means. An IC chip including a VFD driver circuit 104 is secured to rear side of a circuit board 106 and the latter secured to the rear face of the heat dispersing/radiating plate 102.

Connection between the VFD unit 100 and the driver circuit 104 is established by a connection arrangement generally denoted by the numeral 110. In this embodiment the connector pins 111 take the form of small diameter short straight rods which are all arranged along one side of the VFD unit 100. The connection arrangement comprises a flat wire harness 112 which is fixedly connected by way of soldering or a suitable pin connector 114 or the like, to the straight pins 111. The harness 112 is arranged to wrap around the edges of the heat dispersing/radiating plate 102 and circuit board 106 in the illustrated manner. The terminal end of the harness 112 is formed with a suitable connector 116 which engages with a correponding connector 118 fixed to non-illustrated lead lines formed on the rear face of the circuit board 106.

As the connector pins 111 formed on the VFD unit 100 can be arranged close together and in multiple rows, the required large number of connections can be established for a given unit length. The wire harness 112 can be provided with pin connectors at both ends or in any suitable manner which allows for the harness to be simply "plugged in" at both ends thus simplifying production assembly.

During operation the heat generated by the VFD unit 100 is prevented from being directly transmitted to the IC chip in which the VFD driving circuit 104 is included, and is dispersed in a manner which prevents the detremental accumulation of heat in both of the VFD and VFD driver circuit experienced with the prior art.

Further, the use of a flexible wire harness 112 to provide an operative connection between the VFD unit 100 and the VFD driver circuit 104 and the interconnection of the VFD, heat dispersing/radiating plate 102, circuit board 106 and the VFD driver circuit containing IC chip, defines a single body which tends to exhibit a single set of vibrational characteristics. The flexible wire harness eliminates the strain which is placed on the individual connections such as experienced with the prior art.

With the instant embodiment because a relative large number of connections with the VFD unit 100 can be established with the harness type connector it is within the scope of the present claims to increase the length of the wire harness and/or configure the same in a manner which allows the VFD to be connected different and/or additional circuits which are located slightly remote from the position in which the VFD driver circuit is disposed, and therefore expand the amount of control data which can be supplied to the VFD and therefore increase the number and type of images which can be generated and the uses to which the VFD can be put.

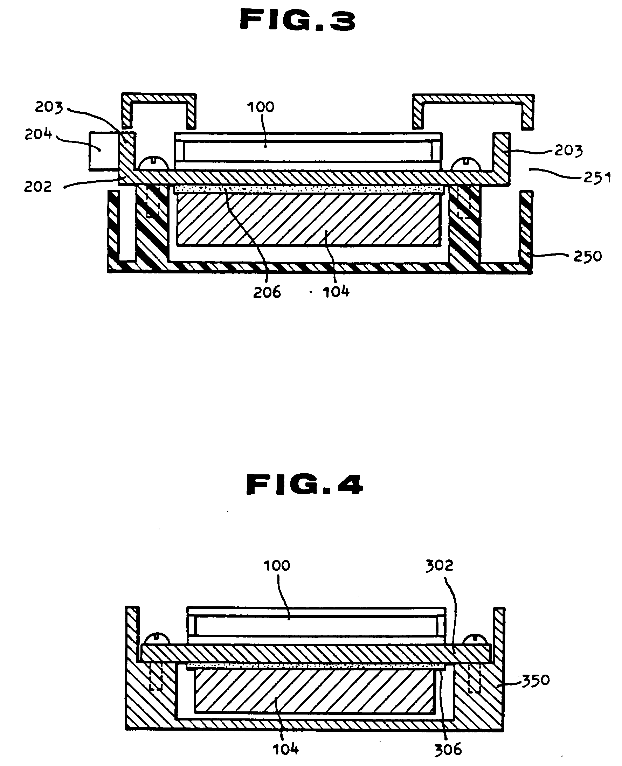

Fig. 3 shows a second embodiment of the present invention. In this arrangement the heat dispersing/radiating plate 202 is formed with upwardly extending side flange portions 203 on which fins 204 can be formed. In the illustrated embodiment, the fins 204 are formed along only one of the two flanges, however, it is within the scope of the claims to provide fins on both flanges and/or other suitable locations as deemed appropriate and/or necessary. The second embodiment is shown enclosed in a casing arrangement 250 and secured thereto via screws. The casing is provided with apertures 251 through which the fins 204 can project and thus be exposed in a manner which promotes heat release to the ambient atmosphere.

A third embodiment of the present invention is shown in Fig. 4. In this arrangement the casing 350 is made of a heat conductive metal such as aluminium or the like and and the heat dispersing/radiating plate 302 connected thereto be means of screws. With this arrangement the heat which is absorbed by the heat dispersing/radiating plate 302 can be conducted to the casing 350 and thus make use of the latter as an additional heat sink. Of course it is within the scope of the present claims to form the casing arrangement shown in Fig. 3 of metal and utilize it in conjunction with the finned plate if so desired.

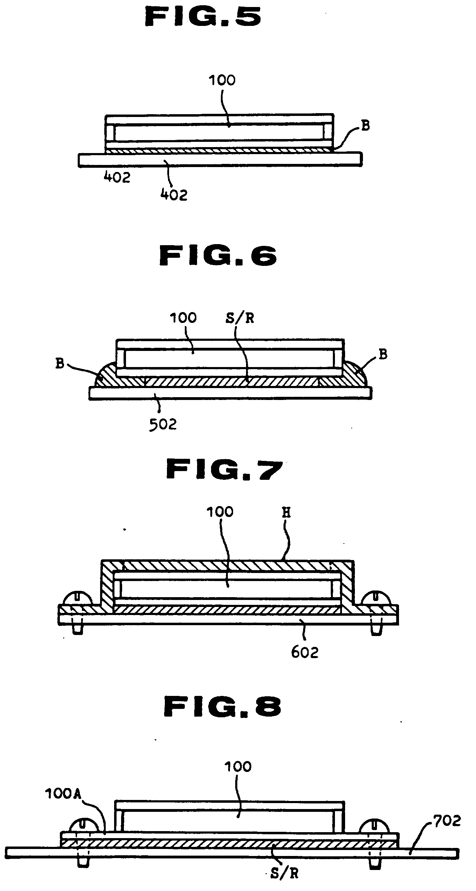

Fourth to seventh embodiments of the instant invention feature constuctions which enable the VFD unit 100 to be connected to the heat heat dispersing/radiating plate in a manner to maximize the efficiency with which heat is transmitted from the VFD unit to the plate. The arrangement shown in Fig. 5 is such as to simply bond the two members together using an epoxy type bond B examples of which are ARON ALPHA (Trade Name) manufactured by Toa Gosei Kagaku Kogyo, and HARD LOCK (Trade Name) produced by Denki Kagaku Kogyo.

The Fig. 6 arrangement is such that a layer of silicone rubber S/R or grease which exhibits good heat conductivity are provided between the VFD unit and the heat dispersing/radiating plate. The VFD unit and the heat conducting layer are secured in place by a bond layer B (formed of one of the above mentioned bonds) which surrounds and encloses the conductive layer S/R layer and also connects the VFD to the heat dispersing/radiating plate 502.

The arrangement shown in Fig. 7 is such that a holder H having a suitable window aperture formed therein is placed over the top of the VFD unit 100 and secured to the heat dispersing/radiating plate 602 by means of screws. The holder H can be made of a heat conductive material and thus add to the heat sink properties provided by the heat dispersing/radiating plate 602. In this arrangement the layer of silicone rubber S/R or grease used in the embodiment of Fig. 6 is also provided.

Fig. 8 shows an embodiment wherein the rear glass panel 100A of the VFD is extended in a manner to define connnection flanges which enable the VFD unit to be connected to the heat dispersing/radiating plate 702 via screws. In this arrangement a silicone rubber layer S/R is sandwhiched between the VFD unit 100 and the heat dispersing/radiating plate 702.

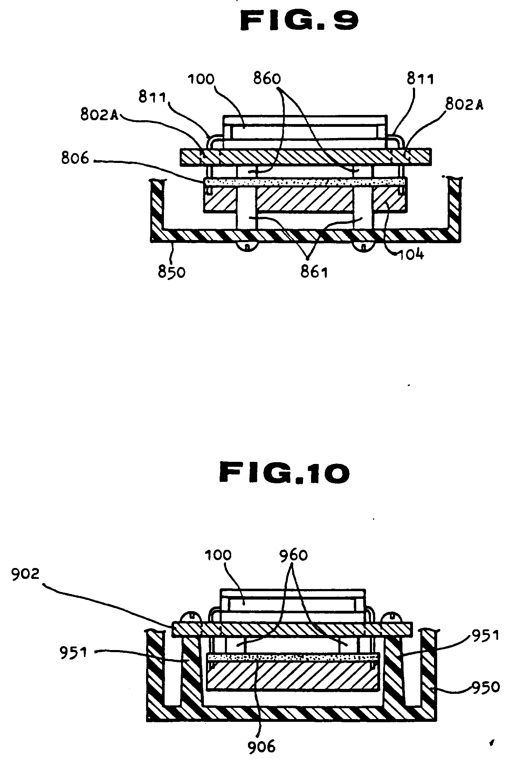

Figs. 9 and 10 show the eighth and ninth embodiment of the present invention. These arrangements differ from the type shown in Fig. 2 in that in these instances the wire harness connection arrangement is replaced by a plurality of relatively long conventional type L-shaped connector pins.

In the Fig. 9 studs 860 are arranged to extend from the front face of the circuit board 806 and to be fixedly connected to the rear face of the heat dispersing/radiating plate 802. Studs 861 which extend from the circuit board 806 are arranged to be connected to a housing member 850 by way of screws and to support the circuit board 806 and VFD unit 100 within a plastic housing member 850. In this instance the heat dispersing/radiating plate 802 is provided with suitable aperatures 802A through which the connector pins 811 are insulatingly disposed. The pins 811, after passing through the apertures 802A are arranged to pass through the circuit board 806 and to be soldered to the lead lines formed on the rear face thereof. As in the previous embodiments the VFD driver circuit 104 is also mounted on the rear face of the circuit board 806.

In the Fig. 10 arrangement the casing 950 is formed with boss portions 951 which extend up on either sides of the circuit board 906 and support the heat dispersing/radiating plate 902 in a manner similar to that of the embodiment shown in Fig. 3. In this case also it is possible to form the casing of metal and use the same as an additional heat sink in manner similar to the embodiment shown in Fig. 4.

In the above mentioned two embodiments, as the VFD unit 100 is secured to the heat dispersing/radiating plate 902 and the heat dispersing/radiating plate 902 in turn securely supported within the housing 950 by the boss portions 951, the vibration induced stress which is applied in the prior art arrangement to the connections defined between the pins and the lead lines formed on the circuit board and which tends to deteriorate the same is eliminated.

Further, the space in the embodiments shown in Figs. 9 and 10 between the heat dispersing/radiating plates and the circuit boards is such as to provide an air layer therebetween which improves both the heat removal from the respective heat dispersing/radiating plates and the shielding of the IC circuit or circuits attached to the rear of the circuit board and to thus prolong their life time.

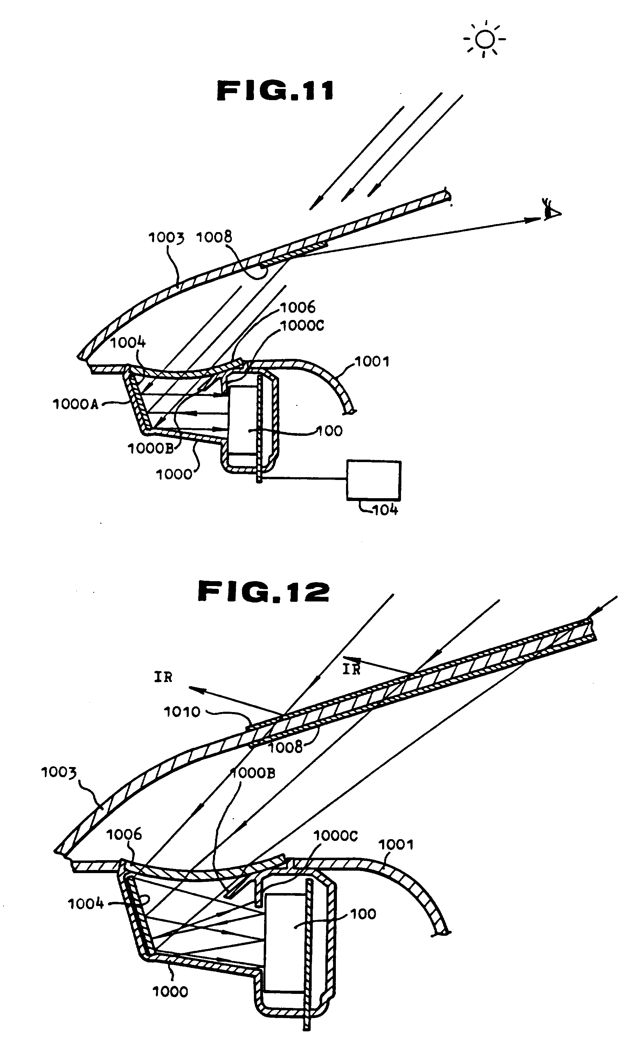

Fig. 11 shows the disposition of the VFD units which are mounted in the manner disclosed above within a HUD arrangement. As shown, the VFD units 100 are disposed in a casing arrangement 1000 located to the rear of the instrument panel 1001 and arranged to face toward the front of the vehicle, or at least toward the base of the windshield or transparent panel 1003 upon which the desired image is to be projected. The casing 1000 has a end wall portion 1000A which is located essentially opposite the VFD unit 100 and on which a mirror element 1004 is disposed. The casing 1000 is further formed with an aperture which is closed by a transparent cover 1006 is disposed and with flange members 1000B and 1000C which extend into the tunnel like passage which is defined within the casing 1000 between the VFD unit 100 and the mirror element 1004 in a manner to prevent any light rays which might pass through the windshield toward the VFD 100 from directly impinging on and causing unnecesary heating of the same.

A reflecting coating 1008 is provided on the inner surface of the windshield 1003 and arranged to function as a half mirror which reflects from 25 - 50 % of the light which impinges thereon toward the observer (e.g. vehicle driver). However, this arrangement tends to suffer from the drawback that even though measures are taken to prevent sunlight and the like from directly entering the tunnel in a manner which permits direct impingement, it is possible that sunlight can be reflected off the mirror and proceed directly toward the VFD unit 100 as indicated in Fig. 11.

Accordingly, in order to obviate this reflection an eleventh embodiment of the present invention provides a second layer or coating 1010 on the windshield 1003 (see Fig. 12). In this case the second coating 1010 is provided on the exterior of the windshield and arranged to reflect IR (infrared heat radiation) as indicated by the arrows and to permit relatively cool light to pass through into the vehicle cabin. With the provision of the coating 1010, in the event that the light which passes through the second layer or filter, is able to impinge on the mirror 1004 at an angle which induces the same to be reflected back toward the VFD unit 100, the amount of IR radiation contained therein is greatly reduced and thus greatly reduces the external heating of the device.

In this embodiment the coating is formed by vacuum depositing a layer TiO₂ having a thickness of about 0.22 µm on the surface of the outer surface of the windshield 1003 and forming a second layer of SiO₂ on top of the first one. The second layer is arranged to have a thickness of about 0.44 µm. This dual layer provides a good IR shutout effect and thus greatly reduces the amount radiation which is permitted to enter the vehicle cabin in the region of the HUD device.

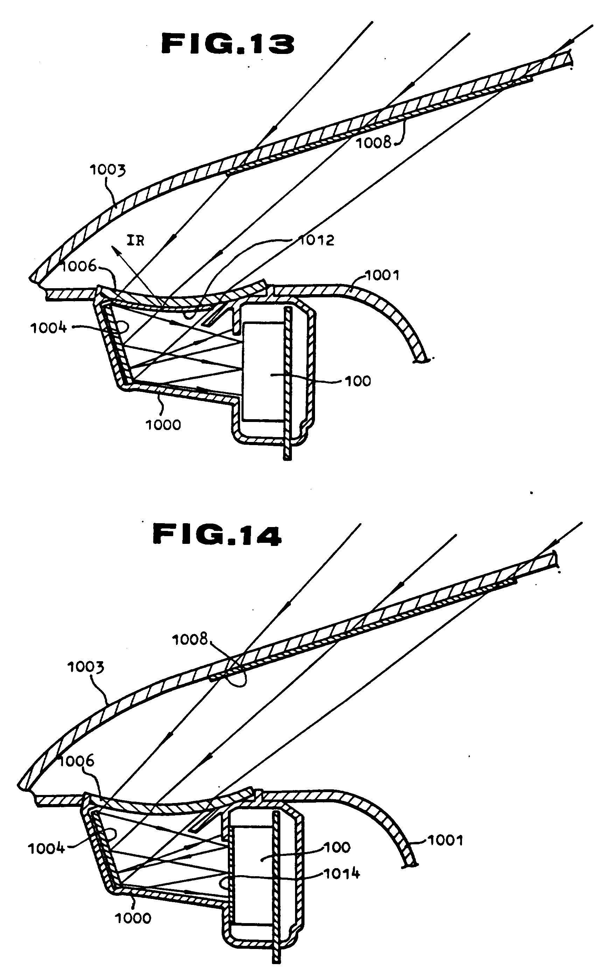

Fig. 13 shows a 12th embodiment of the present invention. In this arrangement the cover 1006 is formed with a IR reflecting coating 1012 on the inner surface thereof. Accordingly, light which is apt to be reflected off the mirror 1004 toward the VFD unit is subject to a filtering effect which tends to screen out the radiation which will cause the undesired heating effect.

Of course it is within the scope of the present claims to use layers on both the windshield and the cover if so desired.

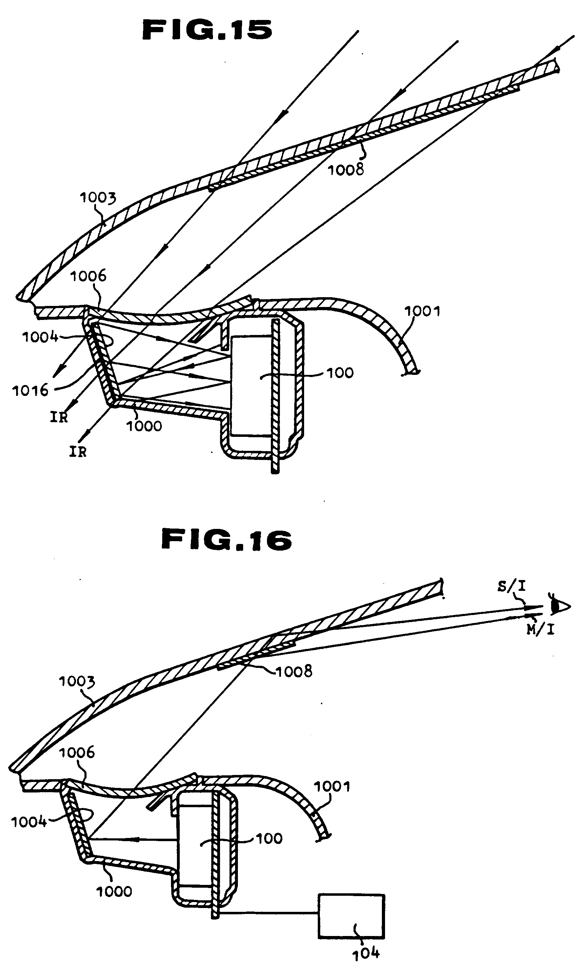

In the embodiment shown in Fig. 14, the front of the VFD 100 is provided with a IR reflective coating 1014 while in the embodiment shown in Fig. 15 a coating 1016 which is transparent to IR radiation is provided on the rear surface of the mirror element 1004. In this instance the IR transmitting coating 1016 can be formed of a first layer of TiO₂ having thickness of about 0.24 µm and second layer of SiO₂ having a thickness of about 0.48 µm. As shown, in Fig. 14 a large amount of the IR radiation which is contained in the impinging light is permitted to pass out of the housing 1000 as indicated by the arrows and thus is not reflected toward the VFD unit 100.

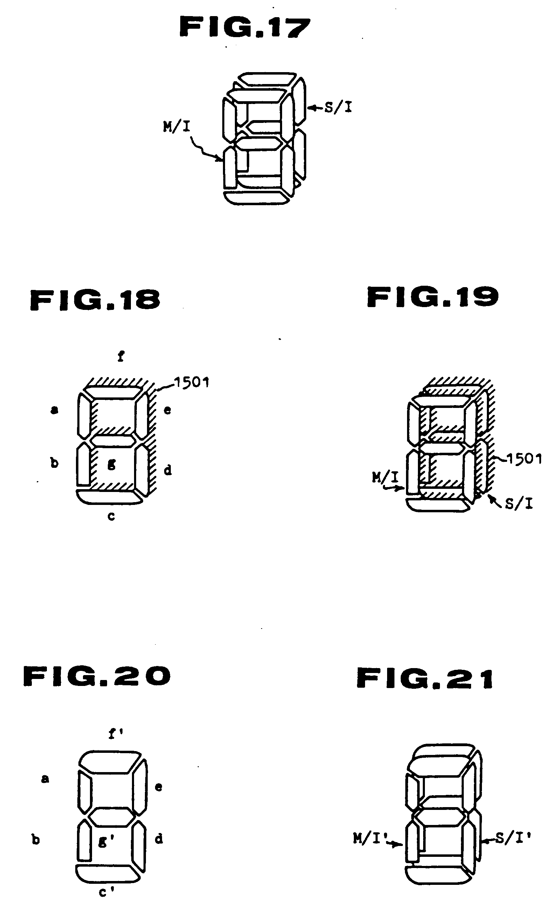

Fig. 16 shows the cause of a double imaging problem which is encountered by the embodiments shown in Figs. 11 to 15. As shown, while a desirable image is formed by the reflection which takes place on the surface of the half mirror reflective coating, as the windshield has a finite thickness, a secondary reflection tends to take place on the outer surface of the same. This secondary reflection tends to produce a secondary image S/I double image of the nature shown in Fig. 17. This secondary image tends to be completely separate from the main one M/I and thus although of reduced intensity still tends to cause the observer to undergo some discomfort and/or annoyance.

In order to overcome this particular problem it is proposed in accordance with a 15th embodiment of the present invention to provide an arrangement wherein each of the segments a - g which are formed in the image mask included in the VFD, are arranged to have a plurality of beard-like lines which extend diagonally upward and to the right in a manner as shown in Fig. 18. With this provision, the main image M/I which is produced on the windshield also has a "beard" of diagonally extending lines 1501 which extend toward and partially overlap the secondary image S/I. This induces an blurring type of overlap of the two images in a manner with a blending into a single bold image which is readily discernable and which is not perceived as being a disturbing double image by the observer.

A further embodiment of the present invention directed to solving the double image problem is shown in Figs. 20 and 21. This arrangement is such that the horizontal segments c', g' and f' of the image mask are broadened as compared with the vertically extening ones a, b, d and e to such degree where the main image M/I' which is formed on the windshield has correspondingly bold portions. Under these circumstances the horizontal segments of the secondary image S/I′ image are also correspondingly bold and as shown in Fig. 21 such as to overlap one and other and thus define a combined single perceivable image.

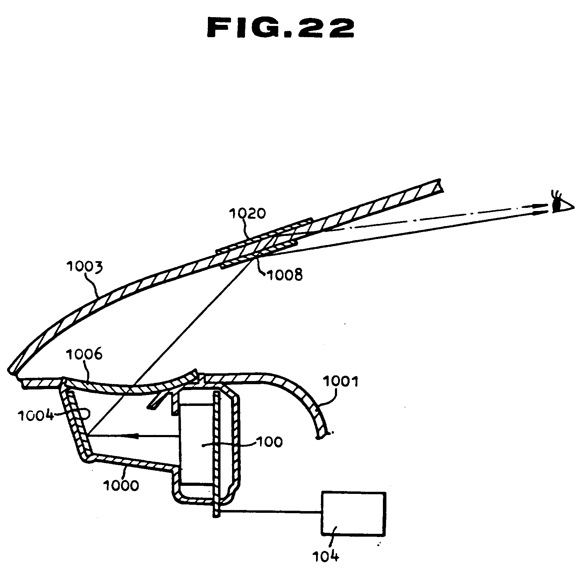

Fig. 22 shows a further embodiment of the present invention. In this arrangement a non-reflecting coating 1020 is formed on the external surface of the windshield. As shown, this coating 1020 is such as to juxtapose the half mirror coating 1008 in a manner wherein the light rays which are not reflected by the coating 1008 pass through the windshield 1003 and impinge on the non-reflective coating 1020. With this arrangement the light rays (shown in phantom) which would normally be reflected toward the observer and cause a double image are not so reflected and the secondary image is not produced and/or strongly attenuated to such degree that it is not perceivable.

In this embodiment the non-relfective coating 1020 is also formed of a first layer of TiO₂ having a thickness of about 0.11 µm and a second layer of SiO₂ having a thickness of about 0.22 µm.

As will be appreciated this non-reflective coating 1020 is formed in a manner essentially similar to the IR reflecting layer 1010 which characterizes the 11th embodiment and differs basically in the thicknesses of the two layers.

Although not shown, in addition to the above measure it is also possible to add a similar coating on the transparent cover 1006. Viz, as the light which is reflected off the mirror element 1004 impinges on the cover, an image on the inner surface of the cover 1006 is apt to be produced and lead to an abberation of the main image on the windshield. By forming a non-reflecting coating on the inner surface of the cover 1006 this problem can be attenuated.

In order to further improve the image formed, it is within the scope of the present invention, to form the mirror element so that the reflecting layer is directly exposed to the light rays and is not covered by a thin transparent layer which can induce a slight abberation of the image which is actually projected onto the windshield.

It will be appreciated that the present invention is not necessarily limited to used in HUD projection type arrangements and can be applied to dashpanel arrangements wherein the image produced is observed directly without the imposition mirrors and half mirrors.

## Claims

1. An image display system for producing an image on a vehicular windshield (1003) comprising an image producing unit (100) and a mirror (1004) reflecting the image produced by said image producing unit (100) to said windshield (1003) disposed in a casing (1000) adjacent to said windshield (1003), said casing (1000) having an aperture facing the windshield (1003), through which light from the image producing unit (100) passes after being reflected by the mirror (1004), **characterised by** a fixed flange-like member (1000B) which is disposed adjacent said aperture, said flange-like member (1000B) extending in front of said image producing unit (100) to prevent external light, which would enter the interior of the casing (1000) through said aperture, from impinging on said image producing unit (100), said flange-like member having a free end which is located within the interior of said casing (1000), a first coating (1008) formed on said windshield (1003), said first coating being arranged to cause said image to appear on said windshield (1003), and means (102) for limiting the amount of heat which accumulates in said image producing unit.

2. An image display system as claimed in Claim 1, in which said fixed flange-like member (1000 B) has an edge portion opposite said free end, which edge portion is integral with said casing (1000), and in which said image display system further comprises a second flange-like (1000C) member which has an edge portion merged with the edge portion of said flange-like member, said second flange-like member having a free end which is located within the interior of the casing (1000).

3. An image display system as claimed in Claim 2, in which the first and second fixed flange-like members (1000B, 1000C) extend into the casing (1000) at an angle with respect to each other.

4. An image display system as claimed in Claim 3, in which said image producing unit takes the form of a vacuum fluorescent display tube (100) and said heat limiting means takes the form of a heat conductive member (102) which is disposed in contact with said vacuum fluorescent display tube (100) and arranged to conduct heat away from said vacuum fluorescent display tube (100) and release the heat to the ambient atmosphere.

5. An image display system as claimed in Claim 4, in which said heat conductive member takes the form of a plate (202), said plate having fins (204) formed thereon to increase the amount of heat which can be released from said plate (202) to the ambient atmosphere.

6. An image display system as claimed in Claim 4, in which said heat conductive member takes the form of a heat conductive plate (402), said heat conductive plate (402) being bonded to said vacuum fluorescent display tube (100).

7. An image display system as claimed in Claim 6, further comprising a layer of heat conductive material (S/R) which is interposed between said plate (502) and said vacuum fluorescent display tube (100).

8. An image display system as claimed in Claim 4, in which said heat conductive member takes the form of a plate (602), said plate (602) being detachably secured to a casing member (H) in which said vacuum fluorescent tube (100) is housed.

9. An image display system as claimed in Claim 8, in which said casing member (H) is made of a heat conductive material and the casing member (H) acts as an additional heat sink.

10. An image display system as claimed in Claim 1, in which as the windshield (1003) has a thickness, a secondary image (S/I) tends to be produced in addition to the main image (M/I) formed by said first coating (1008), said image producing unit includes means for causing the main image (M/I) to be so configured and arranged that the secondary image (S/I) blends with the main image (M/I) and renders the main and secondary images visibly indiscernible from one another.

11. An image display system as claimed in Claim 1, further comprising an infrared radiation reflective layer (1010) formed on a surface of said windshield (1003).

12. An image display system as claimed in Claim 11, in which said infrared radiation reflective layer (1010) comprises a first layer of TiO₂ formed on the windshield (1003) and a second layer of SiO₂ formed on said first layer.

13. An image display system as claimed in Claim 1, further comprising:
a transparent cover (1006) which is disposed in said aperture; and an infrared radiation reflective layer (1010) formed on said windshield (1003).

14. An image display system as claimed in Claim 13, in which said infrared radiation reflective layer is formed on the inner surface of said windshield (1003).

15. An image display system as claimed in Claim 1, further comprising an infrared radiation reflective layer (1014) which is formed on the front of the image producing unit (100).

16. An image display system as claimed in Claim 1, in which said mirror (1004) comprises an infrared radiation transparent layer (1016) which does not reflect infrared radiation and allows the same to pass through the mirror (1004) without being reflected.

17. An image display system as claimed in Claim 1, in which said image producing unit further comprises mask means for producing a main image (M/I) which is so shaped and arranged as to blend with a secondary image (S/I) which is produced by the light which passes through the half-mirror coating (1008) and is reflected by the external surface of said windshield (1003), the blending of the main and secondary images producing a single image.

18. An image display system as claimed in Claim 17, in which said mask means includes a plurality of beard-like lines (1501) which are formed in the mask and which extend from segment (a-g) defining apertures at a predetermined angle.

19. An image display system as claimed in Claim 17, in which said mask means is formed in a manner wherein the mask apertures which produce the horizontal image segments (c,f,g) of the image are broader than the aperture which produces the vertical segments.

20. An image display system as claimed in Claim 1, further comprising a non-reflective coating (1020) formed on the external surface of said windshield (1003), said non-reflective coating (1020) attenuating the formation of a secondary image (S/I) by the light which passes through the half-mirror layer (1008).

21. An image display system as claimed in Claim 1, in said image producing unit comprises:
a vacuum fluorescent display unit (100);
a heat conductive plate (802,902) secured to said vacuum fluorescent display (100) unit in such a manner that heat generated in said display unit is transferred to said heat conductive plate (802,902) and dispersed to the atmosphere surrounding said display unit and said heat conductive plate;
a circuit board (806,906) connected with said heat conductive plate (802,902) in a manner which maintains it in a fixed relationship between a first face of the circuit board (806,906) and the heat conductive plate (802,902);
a driving circuit (104) fixed to a second face of said circuit board (806,906), said driving circuit (104) being arranged to produce control signals by which said display unit is induced to selectively produce an image, said circuit board having lead lines on said second face; and
connection means operatively interconnecting said lead lines and said display unit to establish an operative connection between said driving circuit (104) and said display unit;
wherein said connecting means comprises:
a first set of connection pins (811) arranged along one side of said display unit; and
a flexible wire harness operatively connected with said first set of connection pins (811) at a first end thereof and with said lead lines at the second end thereof.

22. An image display system as claimed in Claim 21, further comprising a layer of silicon rubber (S/R) disposed between said display unit (100) and said heat conductive plate (502).

23. An image display system as claimed in Claim 22, further comprising:
means defining a plurality of through apertures (802A) in the heat conductive plate (802); and
means defining a plurality of through holes in the circuit board (806,906), said through holes being aligned with the through apertures (802A) of the heat conductive plate (802),
wherein said pins (811) extends through said through apertures (802A) and said through holes.

## Patentansprüche

1. Bildanzeigesystem zur Erzeugung eines Bildes auf einer Fahrzeug-Windschutzscheibe (1003), mit einer Bilderzeugungseinheit (100) und einem Spiegel (1004), der das durch die Bilderzeugungseinheit (100) erzeugte Bild zu der Windschutzscheibe (1003) reflektiert und in einem Gehäuse (1000) neben der Windschutzscheibe (1003) angeordnet ist, wobei das Gehäuse (1000) eine zu der Windschutzscheibe (1003) weisende Öffnung aufweist, durch die Licht der Bilderzeugungseinheit (100) hindurchgeht, nachdem dieses durch den Spiegel (1004) reflektiert wurde, gekennzeichnet durch ein feststehendes, flanschartiges Teil (1000B), das neben der Öffnung angeordnet ist, wobei das flanschartige Teil (1000B) sich vor der Bilderzeugungseinheit (100) erstreckt um zu verhindern, daß Außenlicht, das durch die Öffnung in das Innere des Gehäuses (1000) einfallen würde, auf die Bilderzeugungseinheit (1000) auftrifft, und das flanschartige Teil ein freies Ende aufweist, das innerhalb des Gehäuses (1000) angeordnet ist, eine erste Beschichtung (1008) an der Windschutzscheibe (1003), wobei die erste Beschichtung ein Erscheinen des Bildes auf der Windschutzscheibe (1003) ermöglicht, und Vorrichtungen (102), die die Wärmemenge, die sich in der Bilderzeugungseinheit ansammelt, begrenzen.

2. Bildanzeigesystem nach Anspruch 1, bei dem das feststehende, flanschartige Teil (1000B) einen Kantenabschnitt gegenüber dem freien Ende aufweist, wobei der Kantenabschnitt integral mit dem Gehäuse (1000) ausgebildet ist, und das Bildanzeigesystem weiterhin ein zweites, flanschartiges Teil (1000C) aufweist, das einen Kantenabschnitt besitzt, der mit dem Kantenabschnitt des flanschartigen Teils zusammenläuft, wobei das zweite, flanschartige Teil ein freies Ende aufweist, das im Inneren des Gehäuses (1000) angeordnet ist.

3. Bildanzeigesystem nach Anspruch 2, bei dem das erste und zweite feststehende, flanschartige Teil (1000B, 1000C) sich unter einem Winkel gegeneinander angestellt in das Gehäuse (1000) erstrecken.

4. Bildanzeigesystem nach Anspruch 3, bei dem die Bilderzeugungseinheit eine Vacuum-Fluoreszenzbildröhre (100) und die Wärmebegrenzungsvorrichtung ein wärmeleitendes Element (102) ist, das in Berührung mit der Vacuum-Fluoreszenzbildröhre steht und so angeordnet ist, um Wärme von der Vacuum-Fluoreszenzbildröhre (100) wegzuleiten und an die Umgebung abzugeben.

5. Bildanzeigesystem nach Anspruch 4, bei dem das wärmeleitende Element die Form einer Platte (202) aufweist, an der Rippen (204) ausgebildet sind, um die Abgabe der Wärmemenge von der Platte (202) an die Umgebung zu erhöhen.

6. Bildanzeigesystem nach Anspruch 4, bei dem das wärmeleitende Element als eine wärmeleitende Platte (402) ausgebildet ist, die an die Vacuum-Fluoreszenzbildröhre (100) geklebt ist.

7. Bildanzeigesystem nach Anspruch 6, das weiterhin eine Schicht aus wärmeleitendem Material (S/R) aufweist, die zwischen der Platte (502) und der Vacuum-Fluoreszenzbildröhre (100) angeordnet ist.

8. Bildanzeigesystem nach Anspruch 4, bei dem das wärmeleitende Element als eine Platte (602) ausgebildet ist, die lösbar an einem Gehäuseteil (H) befestigt ist, in dem die Vacuum-Fluoreszenzröhre (100) aufgenommen ist.

9. Bildanzeigesystem nach Anspruch 8, bei dem das Gehäuseteil (H) aus einem wärmeleitenden Material hergestellt ist und als zusätzliche Wärmesenke wirkt.

10. Bildanzeigesystem nach Anspruch 1, bei dem, - da die Windschutzscheibe (1003) eine bestimmte Dicke besitzt, zusätzlich zu dem Primärbild (M/I), das in der ersten Beschichtung (1008) gebildet wird, ein Sekundärbild (S/I) auftreten kann,- die Bilderzeugungseinheit Mittel aufweist, die dafür sorgen, daß das Primärbild (M/I) so konfiguriert und angeordnet wird, daß das Sekundärbild (S/I) sich mit dem Primärbild (M/I) mischt, so daß das Primär- und Sekundärbild nicht voneinander unterscheidbar wahrgenommen werden können.

11. Bildanzeigesystem nach Anspruch 1, das weiterhin eine Infrarotstrahlung reflektierende Schicht (1010) aufweist, die an einer Oberfläche der Windschutzscheibe (1003) vorgesehen ist.

12. Bildanzeigesystem nach Anspruch 11, bei dem die Infrarotstrahlung reflektierende Schicht (1010) eine erste Schicht aus Titandioxyd aufweist, die auf der Windschutzscheibe (1003) aufgebracht ist, und eine zweite Schicht aus Siliciumdioxyd, die auf der ersten Schicht aufgebracht ist.

13. Bildanzeigesystem nach Anspruch 1, das weiterhin eine transparente Abdeckung (1006) aufweist, die in der Öffnung angeordnet ist, und bei dem eine Infrarotstrahlung reflektierende Schicht (1010) an der Windschutzscheibe (1003) vorgesehen ist.

14. Bildanzeigesystem nach Anspruch 13, bei dem die Infrarotstrahlung reflektierende Schicht an der Innenoberfläche der Windschutzscheibe (1003) vorgesehen ist.

15. Bildanzeigesystem nach Anspruch 1, das weiterhin eine Infrarotstrahlung reflektierende Schicht (1014) aufweist, die an der Vorderseite der Bilderzeugungseinheit (100) vorgesehen ist.

16. Bildanzeigesystem nach Anspruch 1, bei dem der Spiegel (1004) eine Infrarotstrahlung durchlassende Schicht (1016) aufweist, die keine Infrarotstrahlung reflekiert und ermöglicht, daß selbige ohne reflektiert zu werden, durch den Spiegel (1004) hindurchgeht.

17. Bildanzeigesystem nach Anspruch 1, bei dem die Bilderzeugungseinheit weiterhin eine Maskierung zur Erzeugung des Primärbildes (M/I) aufweist, das so gestaltet und angeordnet ist, um sich mit dem Sekundärbild (S/I) zu mischen, wobei letzteres durch das Licht erzeugt wird, das durch die Halb-Spiegel-Beschichtung (1008) hindurchgeht und von der Außenoberfläche der Windschutzscheibe (1003) reflektiert wird, wobei die Mischung des Primär- und Sekundärbildes ein einziges Bild erzeugt.

18. Bildanzeigesystem nach Anspruch 17, bei dem die Maskierung eine Vielzahl von bartartigen Linien (1501) aufweist, die in der Maske ausgebildet sind, und die sich unter einem vorgegebenen Winkel von Segmentöffnungen (a-g) aus erstrekken.

19. Bildanzeigesystem nach Anspruch 17, bei dem die Maskierung so ausgebildet ist, daß die Maskenöffnungen, die die horizontalen Bildsegmente (c,f,g) des Bildes erzeugen, breiter sind als jene Öffnungen, die die vertikalen Segmente erzeugen.

20. Bildanzeigesystem nach Anspruch 1, das weiterhin eine nicht-reflektierende Beschichtung (1020) auf der Außenoberfläche der Windschutzscheibe (1003) aufweist, wobei die nicht-reflektierende Beschichtung (1020) die Bildung eines Sekundärbildes (S/I) durch Licht, das durch die Halb-Spiegelschicht (1008) hindurchgeht, abschwächt.

21. Bildanzeigesystem nach Anspruch 1, bei dem die Bilderzeugungseinheit aufweist:
eine Vacuum-Fluoreszenz-Anzeigeeinheit (100);
eine wärmeleitende Platte (802,902), die an der Vacuum-Fluoreszenz-Anzeigeeinheit (100) so angebracht ist, daß in der Anzeigeeinheit erzeugte Wärme zu der wärmeleitenden Platte (802,902) übertragen und an die die Anzeigeneinheit und die wärmeleitende Platte umgebende Atmosphäre abgegeben wird;
eine Schaltungsplatte (806,906), die mit der wärmeleitenden Platte (802,902) so verbunden ist, daß diese in einer festgelegten Beziehung einer ersten Seite der Schaltungsplatte (806,906) und der wärmeleitenden Platte (802,902) gehalten wird;
einen Antriebschaltkreis (104), der an einer zweiten Seite der Schaltungsplatte (806,906) angebracht ist, und der (104) so ausgelegt ist, um ein Steuersignal zu erzeugen, durch das die Anzeigeeinheit dazu gebracht wird, selektiv ein Bild zu erzeugen, wobei die Schaltungsplatte an ihrer zweiten Seite Leitungsbahnen aufweist; und
Verbindungsmittel, die die Leiterbahnen und die Anzeigeeinheit wirksam miteinander verbinden zur Bereitstellung einer wirksamen Verbindung zwischen dem Antriebsschaltkreis (104) und der Anzeigeneinheit, wobei die Verbindungsmittel aufweisen:
einen ersten Satz von Verbindungsstiften (811), die entlang einer Seite der Anzeigeneinheit angeordnet sind; und
ein flexibles Kabelbündel, das mit einem Ende mit dem ersten Satz von Verbindungsstiften (811) und mit seinem zweiten Ende mit den Leitungsbahnen verbunden ist.

22. Bildanzeigesystem nach Anspruch 21, das weiterhin eine Silikonschicht (S/R) aufweist, die zwischen der Anzeigeeinheit (100) und der wärmeleitenden Platte (402) angeordnet ist.

23. Bildanzeigesystem nach Anspruch 22, das weiterhin aufweist:
eine Vielzahl von Durchgangsöffnungen (802A) in der wärmeleitenden Platte (802); und
eine Vielzahl von Durchgangsbohrungen in der Schaltungsplatte (806,906), die mit den Durchgangsöffnungen (802A) der wärmeleitenden Platte (802) fluchten, wobei die Stifte (811) sich durch die Durchgangsöffnungen (802A) und die Durchgangsbohrungen erstrecken.

## Revendications

1. Système de visualisation d'une image pour produire une image sur un pare-brise de véhicule (1003), comprenant une unité (100) de production d'une image et un miroir (1004) réfléchissant l'image produite par ladite unité (100) de production d'une image vers ledit pare-brise (1003), disposée dans un boîtier (1000) adjacent audit pare-brise (1003), ledit boîtier (1000) ayant une ouverture faisant face au pare-brise (1003), par où la lumière de l'unité produisant une image (100) passes après avoir été réfléchie par le miroir (1004) caractérisé par un organe formant rebord (1000B) de longueur fixe, qui est disposé adjacent à ladite ouverture, ledit organe formant rebord (1000B) s'étendant devant ladite unité de production d'une image (100) pour empêcher la lumière externe qui entrerait à l'intérieur du boîtier (1000) par ladite ouverture, de faire impact sur ladite unité (100) de production d'une image, ledit organe formant rebord ayant une extrémité libre qui est placée à l'intérieur dudit boîtier (1000), un premier revêtement (1008) formé sur ledit pare-brise (1003), ledit premier revêtement étant agencé pour former ladite image à apparaître sur ledit pare-brise (1003) et un moyen (102) pour limiter la quantité de chaleur qui s'accumule dans ladite unité de production d'une image.

2. Système de visualisation d'une image selon la revendication 1, où ledit organe formant rebord fixe (1000B) a une portion de bord qui fait face à ladite extrémité libre, laquelle portion de bord fait corps avec ledit boîtier (1000) et où ledit sytème de visualisation d'une image comprend de plus un second organe formant rebord (1000C) qui a une portion de bord qui se fond avec la portion de bord dudit organe formant rebord, ledit second organe formant rebord ayant une extrémité libre qui est placée à l'intérieur du boîtier (1000).

3. Système de visualisation d'une image selon la revendication 2, dans lequel les premier et second organes formant rebords fixes (1000B, 1000C) s'étendent dans le boîtier (1000) à un angle l'un par rapport à l'autre.

4. Système de visualisation d'une image selon la revendication 3, où ladite unité de production d'une image a la forme d'un tube de visualisation fluorescent sous vide (100) et ledit moyen limitant la chaleur a la forme d'un organe conducteur de la chaleur (102) qui est disposé en contact avec ledit tube fluorescent sous vide de visualisation (100) et agencé pour conduire la chaleur au loin dudit tube de visualisation fluorescent sous vide (100) libérer la chaleur vers l'atmosphère ambiante.

5. Système de visualisation d'une image selon la revendication 4, où ledit organe thermo-conducteur a la forme d'une plaque (202), ladite plaque ayant des ailettes (204) qui y sont formées pour augmenter la quantité de chaleur qui peut être libérée par ladite plaque (202) vers l'atmosphère ambiante.

6. Système de visualisation d'une image selon la revendication 4, où ledit organe conducteur de la chaleur a la forme d'une plaque conductrice de la chaleur (402), ladite plaque conductrice de la chaleur (402) étant collée audit tube de visualisation fluorescent sous vide (100).

7. Système de visualisation d'une image selon la revendication 6, comprenant une couche d'un matériau conducteur de la chaleur (S/R) qui est interposée entre ladite plaque (502) et ledit tube de visualisation fluorescent sous vide (100).

8. Système de visualisation d'une image selon la revendication 4, où l'organe conducteur de la chaleur a la forme d'une plaque (1002), ladite plaque (1002) étant fixée détachable à un organe formant boîtier (H) dans lequel est abrité ledit tube fluorescent sous vide (100).

9. Système de visualisation d'une image selon la revendication 8, où ledit organe formant boîtier (4) est fait d'un matériau thermoconducteur et l'organe formant boîtier (4) sert de radiateur additionnel de chaleur.

10. Système de visualisation d'une image selon la revendication 1, où, comme le pare-brise (1003) a une certaine épaisseur, une image secondaire (S/I) a tendance à se produire en plus de l'image principale (M/I) formée par ledit premier revêtement (1008), ladite unité produisant une image comporte un moyen pour forcer l'image principale (M/I) à être configurée et agencée de façon que l'image secondaire (S/I) se mélange avec l'image principale (M/I) et rende les images principale et secondaire visiblement indécernables l'une de l'autre.

11. Système de visualisation d'une image selon la revendication 1, comprenant de plus une couche (1010) réfléchissant le rayonnement infra-rouge qui est formée sur une surface dudit pare-brise (1003).

12. Système de visualisation d'une image selon la revendication 11, où ladite couche (1010) réfléchissant le rayonnement infra-rouge se compose d'une première couche de TiO₂ formée sur le pare-brise (1003) et d'une seconde couche de SiO₂ formée sur la première couche.

13. Système de visualisation d'une image selon la revendication 1, comprenant de plus :
un couvercle transparent (1006) qui est disposé dans ladite ouverture ; et une couche réfléchissant le rayonnement infra-rouge (1010) formée sur ledit pare-brise (1003).

14. Système de visualisation d'une image selon la revendication 13, où ladite couche réfléchissant le rayonnement infra-rouge est formée sur la surface interne dudit pare-brise (1003).

15. Système de visualisation d'une image selon la revendication 1, comprenant de plus une couche (1014) réfléchissant le rayonnement infra-rouge, qui est formée à l'avant de l'unité de production d'une image (100).

16. Système de visualisation d'une image selon la revendication 1, où ledit miroir (1004) comprend une couche (1016) transparente au rayonnement infrarouge qui ne réfléchit pas le rayonnement infrarouge et lui permet de passer à travers le miroir (1004) sans réflexion.

17. Système de visualisation d'une image selon la revendication 1, où ladite unité de production d'une image comprend de plus un moyen formant masque pour produire une image principale (M/I) qui est configurée et agencée de façon à se mélanger avec une image secondaire (S/I) qui est produite par la lumière qui passe à travers le revêtement en demi-miroir (1008) et est réfléchie par la surface externe dudit pare-brise (1003), le mélange des images principale et secondaire produisant une seule image.

18. Système de visualisation d'une image selon la revendication 17, où ledit moyen formant masque comporte un certain nombre de lignes (1501) formant une barbe qui sont formée dans le masque et qui s'étendent à partir d'ouvertures définissant des segments (a - g) à un angle prédéterminé.

19. Système de visualisation d'une image selon la revendication 17, où ledit moyen formant masque est formé d'une manière où les ouvertures du masque qui produisent les segments horizontaux d'image (c, f, g) de l'image sont plus larges que l'ouverture qui produit les segments verticaux.

20. Système de visualisation d'une image selon la revendication 1, comprenant de plus un revêtement non réfléchissant (1020) formé sur la surface externe du pare-brise (1003), ledit revêtement non réfléchissant (1020) atténuant la formation d'une image secondaire (S/I) par la lumière qui passe à travers la couche du demi-miroir (1008).

21. Système de visualisation d'une image selon la revendication 1, dans ladite unité de production d'une image comprenant :
une unité de visualisation fluorescente sous vide (100)
une plaque conductrice de la chaleur (802, 902) fixée à ladite unité de visualisation fluorescente sous vide (100) de manière que la chaleur produite dans ladite unité de visualisation soit transférée à ladite plaque conductrice de la chaleur (802, 902) et dispersée vers l'atmosphère entourant ladite unité de visualisation et ladite plaque conductrice de la chaleur ;
une planche de circuit (806, 906) connectée à ladite plaque conductrice de la chaleur (802, 902) d'une manière qui la maintient en relation fixe entre une première face de la planche de circuit (806 , 906) et la plaque conductrice de la chaleur (802, 902) ;
un circuit d'attaque (104) fixé à une seconde face de ladite planche de circuit (806, 906), ledit circuit d'attaque (104) étant agencé pour produire des signaux de commande par lesquels ladite unité d'affichage est induite à produire sélectivement une image, ladite planche de circuit ayant des lignes conductrices sur ladite seconde face ; et
un moyen de connexion interconnectant activement lesdites lignes conductrices et ladite unité de visualisation pour établir une connexion active entre ledit circuit d'attaque (104) et ladite unité de visualisation :
où ledit moyen de connexion comprend :
un premier groupe de plots de connexion (811) agencés le long d'un côté de ladite unité de visualisation ; et
un harnais de fils flexibles activement connecté audit premier groupe de plots de connexion (811) à une première extrémité et aux lignes conductrices à une seconde extrémité.

22. Système de visualisation d'une image selon la revendication 21, comprenant de plus une couche en caoutchouc de silicone (S/R) disposée entre ladite unité de visualisation (100) et ladite plaque conductrice de la chaleur (502).

23. Système de visualisation d'une image selon la revendication 22, comprenant de plus :
un moyen définissant un certain nombre d'ouvertures (802A) dans la plaque conductrice de la chaleur (802) ; et
un moyen définissant un certain nombre de trous dans la planche de circuit (806, 906), lesdits trous étant alignés avec les ouvertures (802A) de la plaque conductrice de la chaleur (802),
où lesdits plots (811) s'étendent à travers lesdites ouvertures (802A) et lesdits trous.
